# DEMANDE DE BREVET EUROPEEN

(11) **EP 3 933 010 A1**
(43) Date de publication de la demande: **05.01.2022**
(21) Numéro de dépôt: 21182610.2
(22) Date de dépôt: 29.06.2021
(51) Int. Cl.: C10G 1/04, C10J 3/04, C10J 3/32, C10J 3/36, C10J 3/74, C10J 3/78

(54) **SYSTÈME DE CONVERSION THERMOCHIMIQUE D'UNE CHARGE CARBONÉE EN MILIEU SUPERCRITIQUE DANS UN RÉACTEUR BATCH RELIÉ À UN RÉSERVOIR DE TRANSVASEMENT CONTENANT UN LIQUIDE INERTE CHIMIQUEMENT**

(30) Priorité: 30.06.2020 FR 2006833
(71) Demandeur: Commissariat à l'Energie Atomique et aux Energies Alternatives, 75015 Paris (FR)
(72) Inventeur: PERRET, Christian, 38054 Grenoble (FR)
(74) Mandataire: Nony

(57) **Abrégé**

Système de conversion thermochimique d'une charge carbonée comprenant un réacteur batch contenant un mélange de fluide supercritique et de la charge et un réservoir de transvasement contenant un liquide inerte chimiquement et relié au réacteur.

L'invention consiste essentiellement en un système de conversion thermochimique fonctionnant en cycles avec un réacteur qui réalise la conversion sous fluide supercritique dont le mélange avec les produits issus d'un cycle est transvasé dans un réservoir de transvasement sous la poussée d'un liquide qui remplit simultanément par retour le réacteur, une quantité de charge carbonée étant introduite dans ce dernier à chaque cycle.

Lors d'un transvasement, le liquide contenu initialement dans le réservoir est mis en mouvement par une pompe et arrive par le bas dans le réacteur où elle va pousser vers le haut le mélange supercritique.

## Description

### Domaine technique

La présente invention concerne le domaine de la conversion thermochimique d'une charge carbonée, et plus particulièrement le traitement hydrothermal sous fluide supercritique.

La présente invention vise à améliorer notamment le rendement énergétique du traitement et d'en réduire le temps de cycle.

Par « fluide supercritique », on entend ici et dans le cadre de l'invention, le sens usuel, à savoir une pression et une température au-delà desquelles le fluide se trouve dans un état supercritique. Son comportement devient intermédiaire entre l'état liquide et l'état gazeux: sa masse volumique est celle d'un liquide, mais sa faible viscosité s'apparente à celle d'un gaz.

Typiquement, le dioxyde de carbone a son point critique se situe à 31,1 °C et 7,38 MPa.

Ainsi, par « eau supercritique », il est entendu le sens usuel, c'est-à-dire de l'eau à des températures supérieures à 374°C sous une pression supérieure à 22,1 MPa.

On désigne sous l'appellation « charge carbonée », tout matériau combustible constitué de composés contenant du carbone.

Il peut donc s'agir de biomasse, c'est-à-dire tout matériau inhomogène d'origine végétale contenant du carbone, tel que de la biomasse ligno-cellulosique, des résidus forestiers ou agricoles (paille), qui peut être quasi-sec ou imbibé d'eau comme les déchets ménagers.

Il peut aussi s'agir d'un combustible d'origine fossile, tel que le charbon.

Il peut aussi s'agir de déchets combustibles d'origine industrielle contenant du carbone, tel que des matières plastiques ou des pneumatiques.

II peut aussi s'agir d'une combinaison de biomasse et de combustible d'origine fossile.

Par « réacteur batch », on entend ici et dans le cadre de l'invention, un réacteur de mise en œuvre d'une conversion thermochimique, qui fonctionne en cycles.

Bien que décrite en référence à la gazéification hydrothermale en eau supercritique, l'invention s'applique à tout procédé de conversion thermochimique en batch qui nécessite l'utilisation d'un bain en fluide supercritique.

### Technique antérieure

Bon nombre de procédés existants permettent de convertir par voie thermochimique une charge carbonée en combustibles liquides (biocarburants, biochar), solides (granulés), et gazeux (biogaz, méthane, syngaz, hydrogène).

Parmi ceux-ci, la gazéification de la biomasse et du charbon est connue depuis longtemps. De manière générale, on peut la définir comme une transformation thermochimique de la biomasse ou du charbon par l'action de la chaleur en présence d'agents gazéifiants. On cherche à générer, à l'issue de la gazéification, un mélange de gaz dit gaz de synthèse qui comprend du monoxyde de carbone et de l'hydrogène (CO+H2) entre autres.

Ainsi, les procédés de gazéification de la biomasse ligno-cellulosique permettent de générer un gaz de synthèse qui permet de produire en aval soit des carburants liquides soit d'autres produits organiques.

La gazéification hydrothermale est une voie prometteuse pour traiter et convertir des biomasses liquides en un gaz renouvelable. Un procédé avantageux de gazéification hydrothermale pour la biomasse humide est réalisé en eau supercritique : [1]. Les principaux gaz produits sont un mélange de gaz combustible constitué d'hydrogène (H₂), de méthane (CH4), de monoxyde de carbone (CO) et de dioxyde de carbone (CO₂).

Le procédé peut être réalisé en continu ou en « batch » c'est-à-dire selon un cycle fermé.

Pour une réalisation en « batch », la mise en œuvre habituelle pour une gazéification hydrothermale de la biomasse se fait dans un autoclave contenant un bain d'eau en état supercritique.

L'autoclave fonctionne à température et pression élevées, communément respectivement entre 374°C et 700°C et entre 21,5MPa et 40 Mpa, avec un taux de charge en matière sèche de l'ordre de 15% en masse par rapport à la quantité d'eau nécessaire au traitement.

La montée en température du mélange constitué de la matière sèche et de l'eau à la température de fonctionnement du réacteur batch implique, pour chaque cycle de fonctionnement, de dépenser une énergie importante, supérieure au pouvoir calorique inférieur (PCI) de la biomasse traitée ou à celui des produits obtenus.

Ceci impose d'adjoindre au réacteur batch, un système de récupération de la chaleur performant, afin d'augmenter le rendement énergétique global.

Pour mieux illustrer cet inconvénient, le cas particulier du traitement hydrothermal de la cellulose (C₆H₁₀O₅) est considéré ici. Une température de 745°C et pression de 280 bars sont des conditions de fonctionnement usuelles pour obtenir un mélange de CO, CH₄ et H₂ à l'issue du procédé.

On admet qu'un ratio de 30 à 60 molécules de H₂O pour une molécule de C₆H₁₀O₅ est le plus favorable à la réaction hydrothermale : voir [3] et [4] pour des ratios respectivement de 60 et 40.

Le tableau 1 ci-dessous indique les espèces en présence dans un réacteur batch respectivement en début et en fin de procédé pour une molécule de C₆H₁₀O₅ traitée.

La composition finale est donnée par le calcul de l'équilibre thermodynamique réalisé à l'aide du logiciel CANTERA développé par le CERFACS (Centre Européen de Recherche et de Formation Avancée en Calcul Scientifique).

### [Tableau 1]

**TABLEAU 1**

| **Espèce** | **Conditions initiales en début de procédé batch (nombre de kmoles)** | **Equilibre thermodynamique à la fin du procédé batch (nombre de kmoles)** |
|---|---|---|
| C₆H₁₀O₅ | 1 | 6.106x10⁻⁴² |
| H₂O | 60 | 55.66 |
| CO | 0 | 0.4249 |
| CO₂ | 0 | 4.455 |
| CH₄ | 0 | 1.104 |
| H₂ | 0 | 7.128 |
| Carbone solide | 0 | 0.01634 |
| Goudrons (C₁₀H₈₎ | 0 | 6.946x10⁻²⁹ |
| **Total** | 61 | 68.79 (dont 68.78 de gaz) |

### [Tableau 2]

**TABLEAU 2**

| **Valeur énergétique** | J/kg de C₆H₁₀O₅ |
|---|---|
| chaleur de réaction | 1.848x10⁵ |
| chaleur de montée en température | 2.752x10⁷ |
| chaleur totale pour le process | 2.77x10⁷ |
| PCI C₆H₁₀O₅ | 1.741x10⁷ |
| PCI des produits H₂, CO, CH₄, Carbone solide | 1.688 x10⁷ |

| | |
|---|---|
| *PCI : Pouvoir Calorifique Inférieur. | |

Il ressort du tableau 2 que le PCI des produits obtenus H₂, CO, CH₄, Carbon solide, que l'on peut valoriser, est très proche de celui de la cellulose C₆H₁₀O₅, car le ratio entre les deux est égal à 97%.

En revanche, la quantité d'énergie à fournir pour le procédé batch représente 164% du PCI des produits obtenus (ratio égal à 2.77x10⁷/1.688x10⁷).

Afin d'optimiser le procédé batch pour qu'il soit énergétiquement rentable, il est donc impératif de mettre en œuvre un système de récupération de l'énergie qui se dégage.

Pour ce faire, deux dispositifs sont habituellement envisagés en sortie de réacteur en tenant compte du fait que le contenu d'un réacteur batch est à l'état supercritique en fin de process:
- une turbine qui permet de récupérer l'énergie sous forme mécanique. L'efficacité d'une telle turbine ne peut atteindre 100%. L'objectif premier du procédé étant d'abord du fabriquer du syngaz, la mise en œuvre d'une turbine ne présente que peu d'intérêt ;
- un échangeur de chaleur qui permet de récupérer l'énergie sous forme de chaleur. L'efficacité de la récupération par un échangeur ne peut atteindre 100% et réinjecter cette chaleur récupérée dans le cas d'un procédé batch est difficilement envisageable.

Par conséquent, il existe un besoin pour améliorer encore les procédés batch et systèmes afférents, de conversion thermochimique d'une charge carbonée sous fluide supercritique, et plus particulièrement le traitement hydrothermal de biomasse, notamment afin de pallier les inconvénients précités.

### Exposé de l'invention

Pour ce faire, l'invention a tout d'abord pour objet un Système de conversion thermochimique d'une charge carbonée comprenant :
- un réacteur dit réacteur batch, destiné à contenir un mélange de fluide supercritique et d'une quantité de charge carbonée à convertir et/ou des produits issus de la conversion thermochimique ;
- un déverseur relié au réacteur batch ;
- un réservoir dit de transvasement, destiné à contenir un liquide, dit liquide de poussée, inerte chimiquement vis-à-vis du mélange;
- une première ligne fluidique reliant entre elles les parties supérieures du réservoir de transvasement et du réacteur batch, la première ligne fluidique comprenant une vanne;
- une deuxième ligne fluidique reliant entre elles les parties inférieures du réservoir de transvasement et du réacteur batch, la deuxième ligne fluidique comprenant une pompe réversible;
le système étant configuré pour successivement:
(a) fermer la vanne et mettre à l'arrêt la pompe ;
(b) remplir le réacteur batch avec un volume prédéterminé de fluide pour réaliser la conversion thermochimique de la charge carbonée avec ledit fluide à l'état supercritique ;
(c) remplir le réservoir de transvasement avec un volume prédéterminé de liquide de poussée dont la densité est supérieure à celles du mélange de fluide à l'état supercritique et des produits gazeux issus de la conversion thermochimique;
(d) chauffer le réacteur batch de sorte à mettre le volume prédéterminé de fluide dans un état supercritique à une pression nominale;
(e) ouvrir la vanne et mettre en fonctionnement la pompe de sorte à transvaser respectivement le volume prédéterminé de liquide de poussée dans le réacteur batch et, sous la poussée de ce dernier, le volume de fluide supercritique dans le réservoir de transvasement;
(f) fermer la vanne et mettre à l'arrêt la pompe ;
(g) introduire dans le réacteur batch une quantité donnée de la charge carbonée ;
(h) ouvrir la vanne et mettre en fonctionnement la pompe de sorte à transvaser respectivement le volume prédéterminé de liquide de poussée dans le réservoir de transvasement et, sous la poussée de ce dernier, le volume de fluide supercritique dans le réacteur batch;
(i) fermer la vanne et mettre à l'arrêt la pompe pendant une durée prédéterminée permettant la conversion thermochimique dans le réacteur batch de la quantité de la charge carbonée mélangée avec le fluide supercritique;
(j) actionner le déverseur jusqu'à faire redescendre la pression des gaz régnant dans le réservoir batch à la pression nominale ;
(k) réitérer les étapes (e) à (j) avec autant de fois que la quantité de fluide supercritique restante dans le réservoir batch permet de réaliser la conversion thermochimique ;
(l) récupérer la totalité des gaz et des produits solides présents dans le réservoir batch.

Avantageusement encore, les volumes de remplissage du réacteur batch et du réservoir de transvasement sont identiques.

Avantageusement, le réacteur batch et le réservoir de transvasement sont isolés thermiquement de l'extérieur. Cela permet qu'aucun échange de chaleur n'est réalisé avec les fluides contenus.

Selon un mode de réalisation avantageux, le système comprend au moins une résistance électrique de chauffe, agencée dans le volume de remplissage du réacteur batch, pour chauffer le volume prédéterminé de fluide et l'amener dans son état supercritique à la pression nominale. La résistance électrique plongeant dans le fluide permet de l'amener dans un état supercritique aisément et à moindre coût.

Selon un autre mode de réalisation avantageux, le système comprend au moins un dispositif de récupération par gravité, agencé dans le volume de remplissage du réacteur batch, pour récupérer par gravité les produits solides issus de la conversion thermochimique.

Selon un autre mode de réalisation avantageux, le système comprend au moins un dispositif de répartition de flux, agencé dans le volume de remplissage du réacteur batch, pour répartir le flux de liquide de poussée sur la section horizontale du volume de remplissage.

Avantageusement, le dispositif de récupération par gravité constitue le dispositif de répartition de flux.

De préférence, le dispositif de récupération par gravité et/ou le dispositif de répartition de flux consiste(nt) en une grille et/ou un substrat poreux, agencée horizontalement dans le volume de remplissage.

L'invention a encore pour objet un procédé de gazéification hydrothermale d'une charge carbonée, mis en œuvre par un système tel que décrit précédemment.

Selon une caractéristique avantageuse, le fluide supercritique et le liquide de poussée sont de l'eau.

L'eau liquide de poussée est à une température inférieure à la température critique pour rester liquide. Par exemple si le réservoir est initialement rempli avec de l'eau à température ambiante de l'ordre de 30°C, même au cours des itérations suivantes, elle restera à une température bien inférieure à la température critique.

Le procédé peut consister avantageusement en une gazéification hydrothermale de cellulose (C₆H₁₀O₅).

Autrement dit, l'invention consiste essentiellement en un système de conversion thermochimique fonctionnant en cycles avec un réacteur qui réalise la conversion sous fluide supercritique dont le mélange avec les produits issus d'un cycle est transvasé dans un réservoir de transvasement sous la poussée d'un liquide qui remplit simultanément par retour le réacteur, une quantité de charge carbonée étant introduite dans ce dernier à chaque cycle.

Lors d'un transvasement, le liquide contenu initialement dans le réservoir est mis en mouvement par une pompe et arrive par le bas dans le réacteur où elle va pousser vers le haut le mélange supercritique.

On veille à ce que l'arrivée du liquide dans le volume du réacteur contenant le mélange supercritique soit suffisamment bien répartie et lente pour conserver une stratification thermique verticale qui s'établit par les différences de densités entre le liquide et le fluide supercritique, et éviter ainsi le mélange entre eux. Une interface horizontale bien délimitée entre le liquide et le fluide supercritique lors d'un transvasement permet de minimiser les transferts thermiques entre eux.

Les avantages de l'invention sont nombreux parmi lesquels on peut citer :
- un bilan énergétique bien supérieur à celui d'un procédé par batch selon l'état de l'art. Plus particulièrement, l'énergie à fournir pour le fonctionnement du système selon l'invention ne représente qu'une part minime des PCI des produits obtenus par la conversion thermochimique. Typiquement, l'inventeur a démontré, comme détaillé par la suite, que pour une gazéification hydrothermale de cellulose (C₆H₁₀O₅), l'énergie à fournir au système n'est que 28% du PCI des produits obtenus. En outre, le système peut fonctionner de manière autonome en rebrûlant cette part minime des PCI des produits obtenus, typiquement 28% pour une gazéification hydrothermale de cellulose (C₆H₁₀O₅). Ainsi, contrairement aux procédés batch selon l'état de l'art, un système selon l'invention ne nécessite pas de turbine ou d'un système de récupération de chaleur pour qu'il soit rentable énergétiquement ;
- une montée en température de la charge carbonée beaucoup plus rapide que selon l'état de l'art. En effet, dans le système selon l'invention, la charge carbonée parvient à la température de la réaction thermochimique, juste le temps de transvasement du mélange supercritique dans le réacteur. Dans un réacteur batch selon l'état de l'art, la charge carbonée et le fluide sont portés ensemble à la température de fonctionnement du réacteur, ce qui implique que la charge séj ourne un temps non négligeable à des températures intermédiaires, ce qui n'est pas souhaitable ;
- un temps de cycles bien moindre comparé aux procédés batch selon l'état de l'art. En effet, le temps de cycles d'un système selon l'invention est essentiellement celui nécessaire à la réaction hydrothermale qui est bien moindre que le temps de montée en température d'un réacteur batch selon l'état de l'art, nécessaire à chaque cycle.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une vue schématique montrant un système de conversion thermochimique selon l'invention, en l'absence de tout fluide avant le début de son fonctionnement en cycles.
[Fig 2A] la figure 2A reprend la figure 1 et illustre l'étape initiale de fonctionnement du système selon l'invention (état du système à la fin de l'initialisation).
[Fig 2B] la figure 2B reprend la figure 1 et illustre une étape de fonctionnement du système selon l'invention.
[Fig 2C] la figure 2C reprend la figure 1 et illustre une étape de fonctionnement du système selon l'invention.
[Fig 2D] la figure 2D reprend la figure 1 et illustre une étape de fonctionnement du système selon l'invention.
[Fig 2E] la figure 2E reprend la figure 1 et illustre une étape de fonctionnement du système selon l'invention.
[Fig 2F] la figure 2F reprend la figure 1 et illustre une étape de fonctionnement du système selon l'invention.
[Fig 2G] la figure 2G reprend la figure 1 et illustre la dernière étape de cycles de fonctionnement du système selon l'invention.
[Fig 3] la figure 3 illustre sous forme de courbes le nombre de moles des espèces concernées au début de chaque cycle de fonctionnement d'un système pour la gazéification hydrothermale une mole de C₆H₁₀O₅ traitée par cycle, pour un nombre de six cycles.
[Fig 4] la figure 4 illustre sous forme de courbes le nombre de moles des espèces concernées à la fin de chaque cycle de fonctionnement du système pour la gazéification hydrothermale une mole de C₆H₁₀O₅ traitée par cycle, pour un nombre de six cycles.
[Fig 5] la figure 5 illustre sous forme de courbes le nombre de moles des espèces concernées, qui sont évacuées du système de chaque cycle de fonctionnement du système pour la gazéification hydrothermale une mole de C₆H₁₀O₅ traitée par cycle, pour un nombre de six cycles.
[Fig 6] la figure 6 illustre sous forme de courbes les enthalpies en jeu à chaque cycle de fonctionnement du système pour la gazéification hydrothermale une mole de C₆H₁₀O₅ traitée par cycle, pour un nombre de six cycles.
[Fig 7] la figure 7A illustre sous forme de courbes le bilan énergétique d'un enchaînement d'un nombre de sis cycle de fonctionnement d'un système pour la gazéification hydrothermale une mole de C₆H₁₀O₅ traitée par cycle, pour un nombre de six cycles.

### Description détaillée

Dans l'ensemble de la présente demande, les termes « entrée », « sortie », « amont» et « aval » sont à comprendre par référence par rapport au sens du flux d'eau ou de mélange fluide et charge en conditions supercritiques au sein d'un système de gazéification hydrothermale selon l'invention.

De même, les termes « supérieur », « inférieur », « dessus », « dessous », « haut », bas sont à comprendre par référence aux réacteur et réservoir de transvasement d'un système de gazéification hydrothermale selon l'invention, dans leur configuration verticale installée avec une circulation du liquide par le dessous.

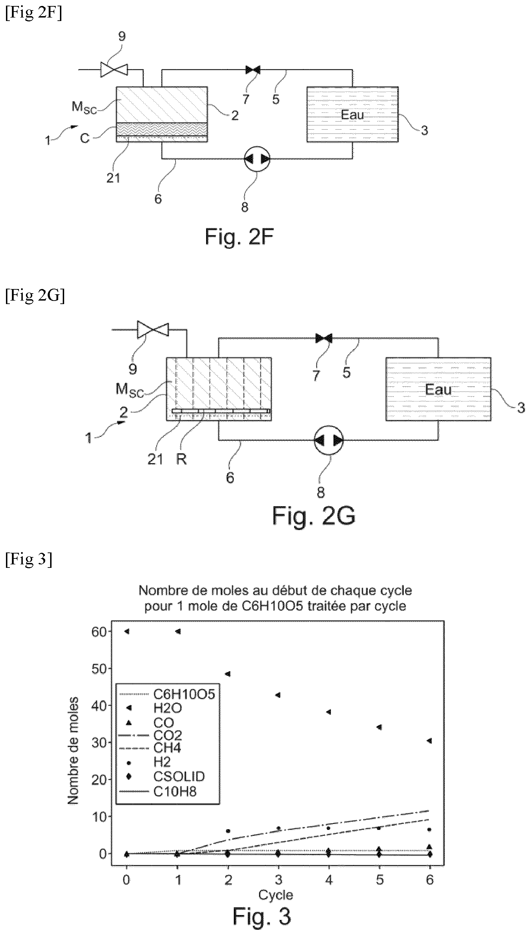

Dans les figures 3 à 5, le terme « C_{SOLID} » désigne le carbone solide produit par la gazéification hydrothermale.

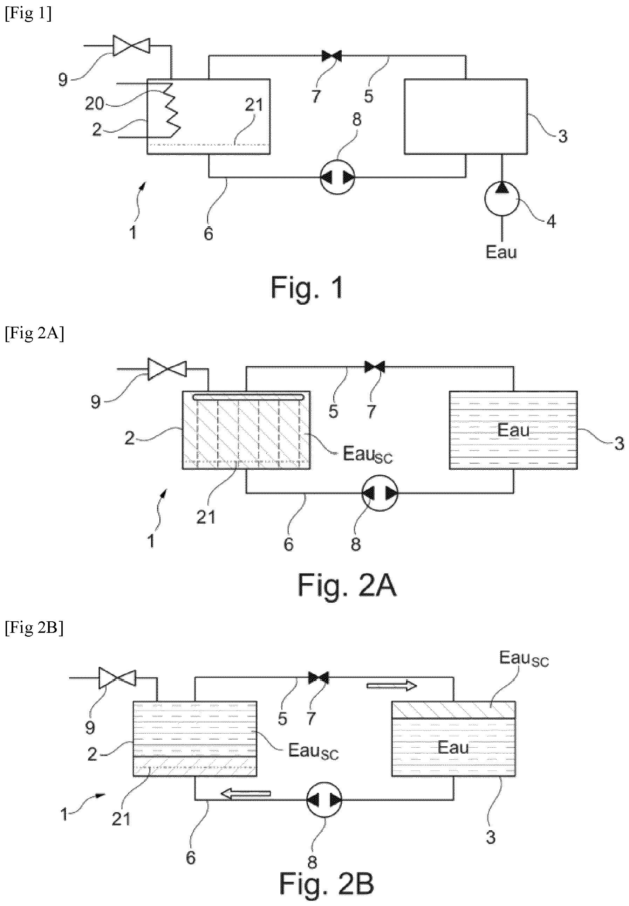

Par souci de clarté, les composants d'un système selon l'invention ne sont pas tous représentés sur les figures 2A à 2G.

Les différents composants d'un système de conversion thermochimique selon l'invention, globalement désigné sous la référence sont montrés en figure 1.

Le système 1 comprend tout d'abord un réacteur batch 2, destiné à contenir un mélange de fluide supercritique et d'une quantité de charge carbonée à convertir et/ou des produits issus de la conversion thermochimique, et un réservoir de transvasement 3, destiné à contenir un liquide, dit liquide de poussée, inerte chimiquement vis-à-vis du mélange.

Le réacteur batch 2 intègre en son sein une résistance électrique de chauffe 20 pour chauffer le fluide et l'amener dans un état supercritique, ainsi qu'une grille 21 dans le fond du volume.

Une pompe 4 est reliée au réservoir 3 afin de l'alimenter en liquide, soit pour le remplir complètement au début des cycles de fonctionnement du système, soit en tant qu'appoint en cours de fonctionnement.

Le réacteur batch 2 et le réservoir de transvasement 3 sont reliés entre eux par une première ligne fluidique 5 et une deuxième ligne fluidique 6 qui débouchent respectivement sur le dessus et sur le dessous à la fois du réacteur 2 et du réservoir 3.

Une vanne monovoie 7 est agencée sur la première ligne fluidique 5.

Une pompe à eau réversible 8 est agencée sur la deuxième ligne fluidique 6.

Un déverseur 9 est relié au réacteur batch 2.

Le dimensionnement et le fonctionnement en cycles itératifs du système 1 vont maintenant être décrits en référence à une gazéification hydrothermale de cellulose.

Le dimensionnement est fonction de la quantité de cellulose que l'on veut traiter à chaque cycle du procédé. Des considérations de coût et de faisabilité interviennent également dans la détermination du volume du réacteur qui devra fonctionner à haute pression et haute température.

Le tableau 3 ci-dessous indique les propriétés de la cellulose et de l'eau à une température (T) et pression (P) dans laquelle cette dernière est dans un état critique, T = 745°C et P = 280 bars.

**[Tableau 3]**

| **Espèce** | **Masse molaire (kg/kmol)** | **Masse volumique (kg/m³)** |
|---|---|---|
| C₆H₁₀O₅ | 162.1 | 536.4 |
| H₂O | 18.02 | 59.6 |

Dans ces conditions d'eau supercritique, pour 1 kmole de C₆H₁₀O₅, il faut 60 kmoles de H₂O, soit pour 1kg de C₆H₁₀O₅, il faut 6,67 kg de H₂O.

A la température de 745°C et la pression de 280 bars, le volume cumulé de 1kg de C₆H₁₀O₅ et de 6,67 kg de H₂O est de 0,114 m³.

Ainsi, pour traiter 1 kg de C₆H₁₀O₅, le réacteur batch 2 et le réservoir 3 ont un volume de remplissage d'une contenance de 0,114 m³ chacun.

Le fonctionnement du système 1 est itératif et comprend une phase d'initialisation, des cycles et une séquence finale.

Pour initialiser le procédé, le réacteur et le réservoir annexe sont isolés l'un de l'autre par la pompe arrêtée et la vanne 7 fermée.

Puis le réservoir 3, est rempli par l'intermédiaire de la pompe 4, avec de l'eau liquide par la mise en route, typiquement à une pression P= 1 bar, et une température T=30°C.

La quantité d'eau nécessaire au traitement d'une charge de biomasse, c-a-d pour une cycle, est introduite dans le réacteur 2 typiquement à une pression P= 1 bar, et une température T=30°C.

Puis, le réacteur 2 est mis en chauffe pour l'amener et donc son contenu en eau à la température de 745°C et à la pression de 280 bars. L'eau est donc dans un état supercritique (Eausc).

A ce stade, le système 1 est donc rempli complètement avec ses fluides, à savoir le réacteur batch 2 rempli complètement en eau supercritique (Eausc), et le réservoir 3 en eau liquide (figure 2A). La phase d'initialisation est terminée.

Les cycles peuvent alors commencer, toutes les cycles se déroulant de manière identique.

Au début de cycle courant, on ouvre alors la vanne 7 et simultanément on met en marche la pompe 8 de sorte à transvaser respectivement l'eau liquide dans le réacteur batch 2 et, sous la poussée de ce dernier, le volume de mélange supercritique, dans le réservoir 3 (figure 2B). Ce mélange supercritique n'est composé que d'eau au premier cycle, puis sera un mélange d'eau et de produits de la gazéification au cours des cycles suivants.

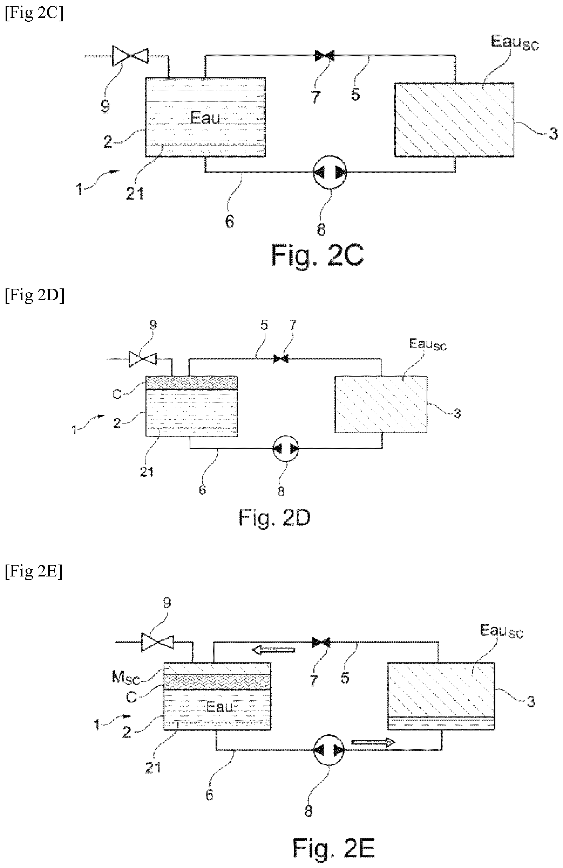

Lorsque le réacteur batch 2 est complètement rempli d'eau liquide et le réservoir 3 est complètement rempli de mélange supercritique, on ferme la vanne 7 et simultanément on met à l'arrêt la pompe 8 (figure 2C).

Le réacteur est ouvert et une charge de cellulose y est déposée puis le réacteur est fermé (figure 2D).

Une fois cette quantité introduite, on ouvre la vanne 7 et simultanément on met en marche la pompe 8 de sorte à transvaser respectivement l'eau liquide dans le réservoir 3 et, sous la poussée de ce dernier, le volume de mélange supercritique dans le réacteur batch 2. La cellulose a une masse volumique intermédiaire entre celle de l'eau liquide et celle du mélange supercritique.

Elle se trouve donc flottante à la surface de l'eau, le mélange supercritique restant au-dessus pendant le transfert de ce dernier dans le réacteur. Dans le cas où elle serait plus lourde que l'eau elle serait stoppée par la grille placée au fond du réacteur (figure 2E).

A la fin de cette étape, le mélange supercritique est dans le réacteur avec la charge de biomasse et le réservoir annexe plein d'eau liquide.

On ferme la vanne 7 et simultanément on met à l'arrêt la pompe 8. (figure 2F)

La réaction de gazéification hydrothermale peut s'initier. La réaction hydrothermale s'effectue le temps nécessaire dans le réacteur : voir par exemple la publication [2] qui stipule que ce temps est de l'ordre de quelques minutes et est fonction du type de matériau traité.

La réaction hydrothermale étant terminée, le nombre de moles de gaz étant supérieur au nombre de mole au début de l'cycle, le déverseur 9 est actionné pour revenir au nombre de mole de gaz initial et par là même à la pression de 280 bars.

C'est donc du mélange supercritique qui doit être évacué, c'est-à-dire un mélange d'eau et de produit de la réaction hydrothermale que l'on doit récupérer.. Ce relâchement des gaz se fait à la fin du cycle, plutôt qu'au fur et à mesure car de cette manière, on perd moins d'eau.

A la fin de la gazéification et suivant la nature de la biomasse traitée, deux types de résidus solide peuvent se trouver au fond du réacteur :
- des sels qui seront dissous dans l'eau que l'on amènera par le bas du réacteur au début du suivant ;
- des résidus carbonés que l'on pourra qui resteront jusqu'à la à la fin des cycles si ceux-là sont en quantités minimes.

Le cycle courant est terminé, on peut passer au suivant qui se déroule de la même manière. On réitère cinq autres cycles, soit six au total, ce nombre étant déterminé comme précisé par la suite.

Une fois le sixième cycle achevé, on collecte la totalité du mélange supercritique contenu par réacteur 2 par le déverseur 9 et on récupère les produits solides (R) présents dans le réservoir batch 2 en l'occurrence accumulés sur la grille 21 (figure 2G) et l'eau chargée de sels contenue par le réservoir 3 est également évacuée.

L'inventeur a modélisé le fonctionnement du système 1 selon l'invention à l'aide du logiciel CANTERA mentionné en préambule.

Cette modélisation se fait en calculant l'équilibre thermodynamique en fonction des produits en présence dans le réacteur batch 2, au début de chaque cycle.

La figure 3 montre la composition des espèces dans le réacteur batch 2, en début de chaque cycle. On précise que le cycle n°0 correspond à la phase d'initialisation où l'on ne fait que chauffer l'eau pour l'amener dans son état supercritique, c'est-à-dire à la température de 745°C et à la pression de 280 bars dans l'exemple.

Naturellement, on observe que la concentration en H₂O diminue cycle après cycle. Au début du dernier cycle, soit le 6^{ème} cycle, il reste un peu plus que 30 moles de H₂O supercritique pour 1 mole de C₆H₁₀O₅ traitée, soit un peu plus que le ratio en dessous duquel on considère que la réaction de gazéification hydrothermale n'est pas réalisée.

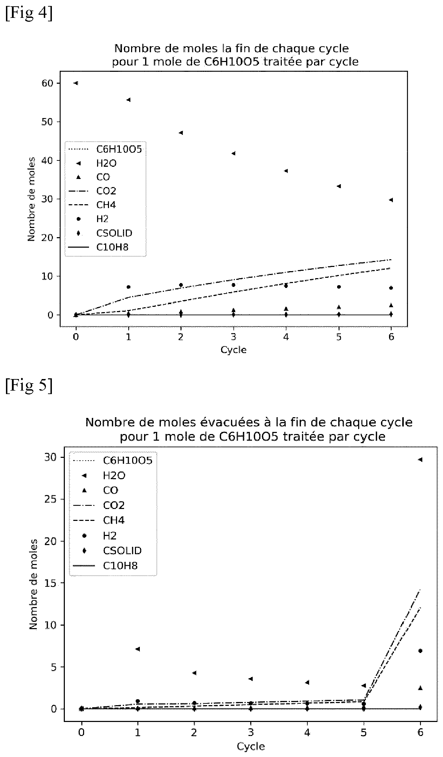

La figure 4 montre la composition des espèces dans le réacteur batch 2, à la fin de chaque cycle.

A la fin du 6^{ème} cycle, il ne reste plus que 29,71 moles de H₂O supercritique. Le fonctionnement du système 1 est donc arrêté.

La figure 5 montre la composition du mélange que l'on évacue à la fin de cycle dans le réacteur 2. Au cycle 0, rien n'est évacué, puisque ce cycle ne fait que chauffer l'eau pour l'amener dans un état supercritique. A la fin du 6^{ème} cycle, tout le contenu du réacteur 2 est récupéré.

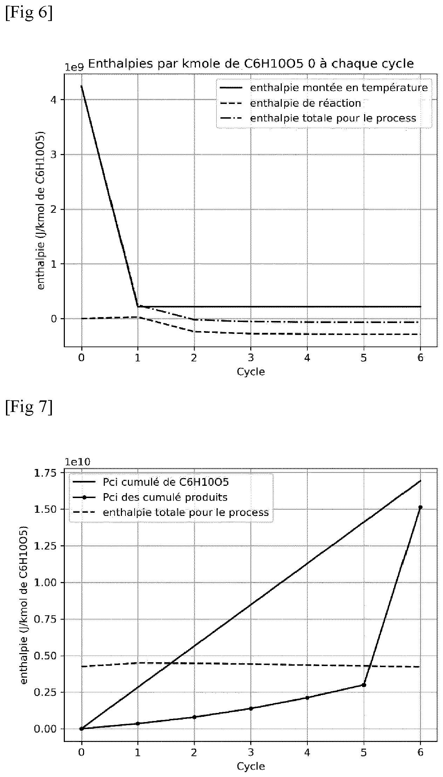

La figure 6 montre les différentes enthalpies en jeu, pour une kmole de C₆H₁₀O₅ traitée par cycle. On observe que l'enthalpie nécessaire à la montée en température du réacteur est très importante lors de l'initialisation, c'est-à-dire lorsqu'il faut amener l'eau à l'état critique. Ensuite, l'enthalpie pour la montée en température chute très fortement car seule la charge de cellulose (une kmole de C₆H₁₀O₅) doit être chauffée.

La figure 7 est un bilan énergétique du fonctionnement du système selon l'invention sur un nombre de six cycles, pour 1 kmole de C₆H₁₀O₅ traitée par cycle.

Au premier cycle, la gazéification hydrothermale est légèrement endothermique puis devient exothermique et compense la chaleur nécessaire à la chauffe de la cellulose. Au final, on constate qu'on a donc besoin de fournir de la chaleur au système que pendant l'initialisation (cycle 0, chauffe de l'eau) et le premier cycle.

Le tableau 4 ci-dessous présente les bilans énergétique respectivement d'un procédé mis en œuvre par un système selon l'invention et, à titre comparatif, d'un procédé batch selon l'état de l'art.

**[Tableau 4]**

| **Valeur énergétique** | **Système selon l'invention (J/kmole de C₆H₁₀O₅)** | **Réacteur batch selon l'état de l'art (J/kmole de C₆H₁₀O₅)** |
|---|---|---|
| chaleur totale pour le process | 7.04x10⁸ | 4.492x10⁹ |
| PCI C₆H₁₀O₅ | 2.822x10⁹ | 2.822x10⁹ |
| PCI des produits H₂, CO, CH₄, Carbone solide | 2.522x10⁹ | 2.738x10⁹ |

L'énergie à fournir pour le fonctionnement du système selon l'invention ne représente plus que 28% du PCI des produits obtenus en comparaison des 164% à fournir pour le fonctionnement d'un réacteur batch selon l'état de l'art. Le PCI des produits obtenus avec le système selon l'invention est par contre un peu plus faible.

Le tableau 5 montre la composition du syngaz obtenu. Le procédé selon l'invention favorise clairement la production de CH₄, tandis qu'un procédé mis en œuvre avec un réacteur batch selon l'état de l'art favorise la production de H₂.

**[Tableau 5]**

| **Espèce** | **Système selon l'invention (mole/mole de C₆H₁₀O₅)** | **Réacteur batch selon l'état de l'art (mole/mole** de **C₆H₁₀O₅)** |
|---|---|---|
| CO | 0.5032 | 0.4249 |
| CO₂ | 3.039 | 4.455 |
| CH₄ | 2.424 | 1.104 |
| H₂ | 1.732 | 7.128 |
| Carbone solide | 0.034 | 0.01634 |
| C₁₀H₈ | 3.359x10⁻¹⁹ | 6.946x10⁻¹⁹ |

L'invention n'est pas limitée aux exemples qui viennent d'être décrits; on peut notamment combiner entre elles des caractéristiques des exemples illustrés au sein de variantes non illustrées.

D'autres variantes et améliorations peuvent être envisagées sans pour autant sortir du cadre de l'invention.

Si l'exemple décrit est une gazéification hydrothermale de cellulose, l'invention s'applique à toute gazéification de biomasse en conditions supercritiques et plus généralement à toute conversion thermochimique d'une charge carbonée en conditions supercritiques.

### Liste des Références citées

[1]: A. Kruse, «Hydrothermal biomass gasification (Review)» The Journal of Supercritical Fluids, vol. 49, pp. 391-399, 2009.
[2]: O. Boutin, J-C. Ruiz, « Gazéification de biomasse en eau supercritique », Les techniques de l'Ingénieur, Réf. J7010 v1, 10 Mai 2013.
[3] Y. Calzavara, C. Joussot-Dubien, G. Boissonnet, S. Sarrade, « Evaluation of biomass gasification in supercritical water process for hydrogen production», Energy Conversion and Management 46 (2005) 615-631.
[4] Y. Matsumura, « Evaluation of supercritical water gasification and biomethanation for wet biomass utilization in Japan Energy», Conversion and Management 43 (2002) 1301-1310.

## Revendications

1. Système (1) de conversion thermochimique d'une charge carbonée comprenant :
- un réacteur (2) dit réacteur batch, destiné à contenir un mélange de fluide supercritique et d'une quantité de charge carbonée à convertir et/ou des produits issus de la conversion thermochimique ;
- un déverseur (9) relié au réacteur batch ;
- un réservoir (3) dit de transvasement, destiné à contenir un liquide, dit liquide de poussée, inerte chimiquement vis-à-vis du mélange;
- une première ligne fluidique (5) reliant entre elles les parties supérieures du réservoir de transvasement et du réacteur batch, la première ligne fluidique comprenant une vanne (7);
- une deuxième ligne fluidique (6) reliant entre elles les parties inférieures du réservoir de transvasement et du réacteur batch, la deuxième ligne fluidique comprenant une pompe réversible (8); le système étant configuré pour successivement:
(a) fermer la vanne et mettre à l'arrêt la pompe ;
(b) remplir le réacteur batch avec un volume prédéterminé de fluide pour réaliser la conversion thermochimique de la charge carbonée avec ledit fluide à l'état supercritique ;
(c) remplir le réservoir de transvasement avec un volume prédéterminé de liquide de poussée dont la densité est supérieure à celles du mélange de fluide à l'état supercritique et des produits gazeux issus de la conversion thermochimique;
(d) chauffer le réacteur batch de sorte à mettre le volume prédéterminé de fluide dans un état supercritique à une pression nominale;
(e) ouvrir la vanne et mettre en fonctionnement la pompe de sorte à transvaser respectivement le volume prédéterminé de liquide de poussée dans le réacteur batch et, sous la poussée de ce dernier, le volume de fluide supercritique dans le réservoir de transvasement;
(f) fermer la vanne et mettre à l'arrêt la pompe;
(g) introduire dans le réacteur batch une quantité donnée de la charge carbonée;
(h) ouvrir la vanne et mettre en fonctionnement la pompe de sorte à transvaser respectivement le volume prédéterminé de liquide de poussée dans le réservoir de transvasement et, sous la poussée de ce dernier, le volume de fluide supercritique dans le réacteur batch;
(i) fermer la vanne et mettre à l'arrêt la pompe pendant une durée prédéterminée permettant la conversion thermochimique dans le réacteur batch de la quantité de la charge carbonée mélangée avec le fluide supercritique;
(j) actionner le déverseur jusqu'à faire redescendre la pression des gaz régnant dans le réservoir batch à la pression nominale;
(k) réitérer les étapes (e) à (j) avec autant de fois que la quantité de fluide supercritique restante dans le réservoir batch permet de réaliser la conversion thermochimique;
(l) récupérer la totalité des gaz et des produits solides présents dans le réservoir batch.

2. Système selon la revendication 1, les volumes de remplissage du réacteur batch et du réservoir de transvasement étant identiques.

3. Système selon l'une revendications précédentes, le réacteur batch et le réservoir de transvasement étant isolés thermiquement de l'extérieur.

4. Système selon l'une revendications précédentes, comprenant au moins une résistance électrique de chauffe, agencée dans le volume de remplissage du réacteur batch, pour chauffer le volume prédéterminé de fluide et l'amener dans son état supercritique à la pression nominale.

5. Système selon l'une revendications précédentes, comprenant au moins un dispositif de récupération par gravité, agencé dans le volume de remplissage du réacteur batch, pour récupérer par gravité les produits solides issus de la conversion thermochimique.

6. Système selon l'une revendications précédentes, comprenant au moins un dispositif de répartition de flux, agencé dans le volume de remplissage du réacteur batch, pour répartir le flux de liquide de poussée sur la section horizontale du volume de remplissage.

7. Système selon la revendication 5 en combinaison avec la revendication 6, le dispositif de récupération par gravité constituant le dispositif de répartition de flux.

8. Système selon l'une revendications 5 à 7, le dispositif de récupération par gravité et/ou le dispositif de répartition de flux consistant en une grille (21) et/ou un substrat poreux, agencée horizontalement dans le volume de remplissage.

9. Utilisation d'système selon l'une quelconque des revendications précédentes pour réaliser une gazéification hydrothermale d'une charge carbonée,

10. Utilisation selon la revendication 9, le fluide supercritique et le liquide de poussée étant de l'eau.

11. Utilisation selon la revendication 10, l'eau liquide de poussée étant à une température inférieure à la température critique.

12. Utilisation selon l'une des revendications 9 à 11, la gazéification consistant en une gazéification hydrothermale de cellulose (C₆H₁₀O₅).
